(19) Europäisches Patentamt / European Patent Office / Office européen des brevets

(11) **EP 2 795 426 B1**

(12) **FASCICULE DE BREVET EUROPEEN**

(45) Date de publication et mention
de la délivrance du brevet:
**21.10.2020 Bulletin 2020/43**

(21) Numéro de dépôt: **12819104.6**

(22) Date de dépôt: **20.12.2012**

(51) Int Cl.:
*G06F 1/3206* (2019.01)      *G06F 1/324* (2019.01)
*G06F 1/3296* (2019.01)

(86) Numéro de dépôt international:
**PCT/FR2012/053029**

(87) Numéro de publication internationale:
**WO 2013/093362 (27.06.2013 Gazette 2013/26)**

(54) **CONTRÔLE TENSION-FRÉQUENCE OPTIMISÉ**

OPTIMIERTE SPANNUNGSFREQUENZSTEUERUNG

OPTIMISED VOLTAGE-FREQUENCY CONTROL

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **21.12.2011 FR 1162200**

(43) Date de publication de la demande:
**29.10.2014 Bulletin 2014/44**

(73) Titulaire: **Commissariat à l'Énergie Atomique
et aux Énergies Alternatives
75015 Paris (FR)**

(72) Inventeurs:
• **ALBEA SANCHEZ, Carolina
F-38190 Froges (FR)**
• **LESECQ, Suzanne
F-38190 Froges (FR)**
• **PUSCHINI PASCUAL, Diego
F-38240 Meylan (FR)**

(74) Mandataire: **Santarelli
49, avenue des Champs-Elysées
75008 Paris (FR)**

(56) Documents cités:
US-A1- 2002 002 689      US-A1- 2004 057 324
US-A1- 2007 229 054      US-A1- 2009 158 078
US-A1- 2010 213 919      US-B1- 7 581 120

**Description**

La présente invention concerne le contrôle en tension et en fréquence de circuits électroniques (numériques ou mixtes analogiques-numériques) dans leur domaine de fonctionnement. Ce contrôle s'applique par exemple aux systèmes intégrés (SoC acronyme de « *System-on-Chip* » en anglais). Il peut également s'appliquer aux architectures GALS (acronyme de *« Globalement Asynchrones et Localement Synchrones »*).

Typiquement, un circuit électronique ou une partie de circuit électronique (communément appelée VFI pour « *Voltage Frequency Island* » en anglais), tous deux désignés par « circuit dans la suite, sont contrôlés en sorte à leur appliquer à chaque instant une tension et une fréquence dans leur domaine de fonctionnement et de manière à limiter la consommation énergétique tout en satisfaisant les contraintes de performance (nombre d'opérations par unité de temps). Pour ce faire, le circuit électronique contrôlé est associé à un « actionneur de tension » et à un « actionneur de fréquence » permettant d'appliquer la tension et la fréquence choisies. Ces deux actionneurs peuvent eux-mêmes être contrôlés par une boucle d'asservissement interne.

Un couple tension-fréquence du domaine de fonctionnement est communément appelé point de fonctionnement.

En pratique, il convient de garantir que pour la tension appliquée, la fréquence appliquée n'est pas trop grande afin de ne pas induire des « fautes temporelles » (« *timing faults* » en anglais).

De nombreuses références bibliographiques et brevets font état des approches dites « DVFS » (acronyme de « Dynamic Voltage Frequency Scaling » en anglais) pour contrôler la tension et la fréquence.

Dans le document US 2011/0083221 la tension est augmentée dans un premier temps puis une demande de changement de fréquence est effectuée dans un second temps. La valeur de la tension a un lien direct avec la valeur de la fréquence changée. Une séquence de changements de tension et une séquence de changements de fréquence peuvent être appliquées. Un indicateur de changement de tension indique la fin de l'étape précédente. La transition pour passer d'une valeur haute à une valeur basse de tension (et vice-versa) et/ou d'une valeur haute à une valeur basse de fréquence (et vice-versa) n'est pas contrôlée.

Dans l'article Zhu et al. "Feedback EDF scheduling exploiting hardware-assisted asynchronous dynamic voltage scaling" ACM SIGPLAN Notices, vol 40:7, pp. 212-222, 2005, la tension est augmentée puis ensuite la fréquence. Le cas de la diminution de ces paramètres n'est pas traité. A l'instant de modification du point de fonctionnement tension-fréquence (V, F), la tension croit en rampe. Le temps nécessaire pour atteindre la tension minimale nécessaire à l'application de la nouvelle fréquence désirée sans faute temporelle est ensuite estimé. Lorsque ce temps est écoulé, la nouvelle fréquence est appliquée. Fréquence et tension sont donc contrôlées séquentiellement.

Dans l'article Wu et al. "Formal online methods for voltage/frequency control in multiple clock domain microprocessors" ACM SIGARCH Computer Architecture News, vol 32:5, pp. 248-259, 2004, le DVFS est abordé sous l'aspect d'un problème de réglage de la fréquence pour s'adapter aux variations de charge. Un schéma « parfait » de DVFS permet d'obtenir les performances souhaitées, sans consommation inutile. Un modèle de type file d'attente est utilisé pour modéliser le domaine de fréquence. Le modèle utilisé est non-linéaire : il est tout d'abord linéarisé puis une loi de contrôle linéaire, implémentée de manière matérielle. Ce document précise que la fréquence et la tension associée ne peuvent être modifiées instantanément. Pour le contrôle, un intervalle de contrôle lui-même constitué de N périodes d'échantillonnage est utilisé. La fréquence est déduite à partir du calcul de la capacité d'exécution, elle-même sortie d'un correcteur PI (Proportionnel-Intégral) numérique standard. En pratique, ce n'est donc pas la dynamique de la fréquence qui est contrôlée mais celle de la capacité d'exécution. Enfin, aucune information n'est donnée quant à la manière de modifier la tension par rapport à la fréquence et quant à la transition entre deux points de fonctionnement.

Le document Juang et al. « Distributed, Formal Energy Management of Chip Multiprocessors », ISLPED'05, 8-10 Août, 2005, San Diego, California, USA étend l'approche du document Wu et al. au cas d'un système multiprocesseurs. Une approche de contrôle distribué est mise en œuvre. Ici encore, aucune information sur les transitoires de fréquence et de tension n'est donnée, pas plus que sur le couplage de ces paramètres.

L'article Choi et al., "Fine-grained dynamic voltage and frequency scaling for precise energy and performance tradeoff based on the ratio of off-chip access to on-chip computation times". IEEE Trans. on Computer-Aided Design of Integrated Circuits and Systems, vol 24:1, 18-28, 2005, présente aussi un DVFS mais sans aborder la question de la transition d'un point de fonctionnement à un autre.

Dans l'article Lu et al., "Control-theoretic dynamic frequency and voltage scaling for multimedia workloads" Proc. of the international conférence on compilers, architecture, and synthesis for embedded systems, pp. 156-163, 2002, concernant une application multimédia, la tension V et la fréquence F d'un processeur sont adaptées en fonction du taux de débit de trame. En fait, la théorie du contrôle est utilisée pour adapter la fréquence F tout en garantissant le débit désiré (et donc le retard souhaité). En pratique, « un facteur de fréquence » (« frequency factor » dans le document) compris entre 0 et 1, est adapté mais le contrôle est réalisé sur le retard moyen. Aucune information quant à la dynamique des transitoires de fréquence, n'est donnée. Il est seulement indiqué que le transitoire de fréquence (induit par une modification du facteur de fréquence) est court devant la durée de décodage d'une trame. Rien n'est indiqué sur les modifications de tension ni sur la manière dont la tension et la fréquence doivent être pilotées pour éviter les fautes temporelles.

L'article Herbert et al., "Variation-aware dynamic voltage/frequency scaling" IEEE 15th International Symposium on High Performance Computer Architecture (HPCA), 301-312, 2009 traite de DVFS (Dynamic Voltage and Frequency Scaling) mais il n'aborde pas les problèmes de transitoire qui apparaissent lors des modifications de tension et fréquence.

Le document US 2002/002689 divulgue un circuit de conversion pour fournir des points de fonctionnement dans une unité de processeur centrale (CPU) au moyen des circuits résistance-condensateur (RC) qui génèrent des fréquences et des tensions de fonctionnement requises de façon stable et synchrone.

Le document US 2004/057324 divulgue un circuit de génération de tension d'alimentation interne par modification d'un niveau de tension d'alimentation interne à générer en fonction d'une vitesse de fonctionnement du circuit interne.

Le document US 2007/229054 divulgue la génération d'un signal d'indication d'une tension d'alimentation à laquelle le circuit intégré peut fonctionner pour une fréquence de fonctionnement donnée et une unité de commande configuré pour générer une signal de commande indiquant une tension d'alimentation demandée pour le circuit intégré en réponse au signal d'indication.

Les inventeurs ont constaté que dans l'art antérieur, la transition d'un passage d'un point de fonctionnement à un autre n'était pas contrôlée de manière optimale.

En particulier, les inventeurs ont constaté que les systèmes DVFS passent d'un point de fonctionnement à un autre de manière séquentielle en modifiant séparément tension et fréquence afin d'éviter les fautes de timing.

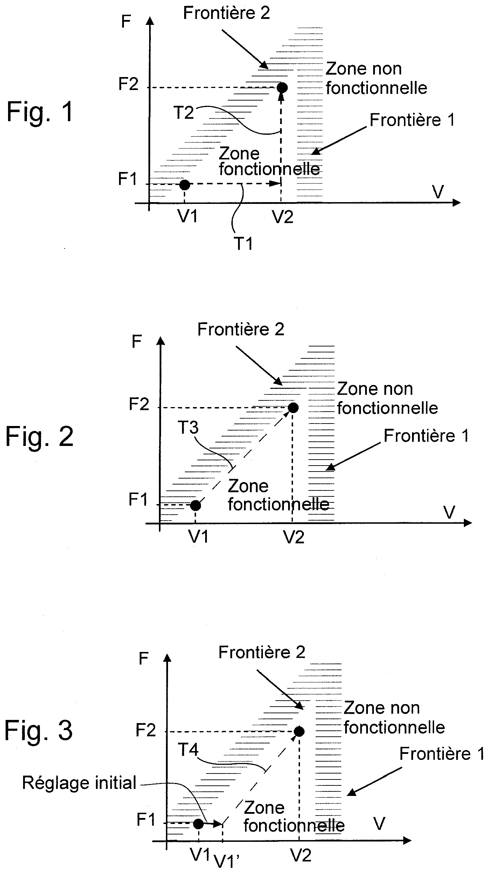

Ce passage séquentiel est illustré par la **figure 1**.

La figure 1 illustre un domaine de fonctionnement tension-fréquence par deux axes orthogonaux avec la tension V en abscisses et la fréquence F en ordonnées. La zone (ou domaine) fonctionnelle (ou de fonctionnement) du circuit considéré est délimitée par l'axe des abscisses (étant donné que la fréquence est une grandeur positive), une première frontière (Frontière 1) verticale représentant la tension maximale que peut supporter le domaine de fonctionnement tension-fréquence considéré du circuit et une deuxième frontière (Frontière 2) représentant pour chaque valeur de tension admissible par le circuit, la fréquence maximale autorisée (pour éviter les fautes temporelles).

La figure 1 illustre le passage d'un premier point de fonctionnement (V1, F1) vers un deuxième point de fonctionnement (V2, F2). Selon l'art antérieur, ce passage se fait en deux temps en passant par un point de fonctionnement intermédiaire (V2, F1). Ce passage en deux temps évite de sortir de la zone fonctionnelle.

Néanmoins, durant la durée de transition (i.e. le passage du point (V1, F1) au point (V2, F2)), la consommation dynamique du circuit n'est pas optimale.

En effet, la puissance dynamique Pdyn est proportionnelle à la fréquence F et est quadratique en tension V ($Pdyn \propto FV^2$). Or durant toute la transition schématisée par les flèches T1 et T2, la fréquence pourrait être plus élevée. Certes plus de puissance serait consommée mais le circuit serait plus performant (en termes de nombre d'opérations par unité de temps).

Les inventeurs ont donc mis à jour un besoin pour améliorer le contrôle tension-fréquence des circuits électroniques.

L'invention s'inscrit dans ce cadre.

Un **premier aspect** de l'invention concerne un procédé de contrôle d'un circuit électronique selon la revendication 1.

Selon la présente invention, le terme « circuit » peut s'entendre comme un circuit dans son ensemble ou une partie de circuit (par exemple un « Voltage Frequency Island », VFI).

L'évolution de la tension d'alimentation et de la fréquence est contrôlée tout au long du changement de point de fonctionnement (V, F) en restant au plus proche d'une courbe de référence dans le domaine de fonctionnement qui permette de garantir une performance maximale pour le point de fonctionnement transitoire considéré (entre les premier et deuxième points) sans faute temporelle.

Il est ainsi possible de réaliser un contrôle des évolutions de la tension et de la fréquence de manière à obtenir un circuit fonctionnel tout au long de la phase de transition entre deux points de fonctionnement tout en se plaçant sur le point optimal de performance/consommation (c'est-à-dire performance optimale pour une consommation associée minimale).

Par exemple, le contrôle est conjoint. Par exemple encore, le circuit contrôlé a une architecture DVFS.

Selon des modes de réalisation il est possible de contrôler le circuit en sorte à ce qu'il suive de manière autonome une trajectoire optimale dans le plan V-F.

Il est possible de garder le circuit contrôlé dans un état optimal en termes de performance maximale au point transitoire considéré et de consommation minimale en ce point.

Pour mettre en œuvre l'asservissement, un couplage des « actionneurs » génériques de tension et fréquence peut être mis en œuvre.

Selon un exemple de définition de la courbe de référence, pour une tension donnée du domaine de fonctionnement, la courbe de référence maximise la fréquence à l'intérieur dudit domaine.

Ainsi, une « trajectoire optimale » permet en chaque point de maximiser la performance (en termes de nombre d'opérations par unité de temps) du point de fonctionnement transitoire sans violer les frontières du domaine de fonctionnement.

Le procédé comporte la répétition des étapes suivantes une pluralité de fois pendant la transition du premier point de fonctionnement au deuxième point de fonctionnement :

    a) mesurer une valeur courante de tension et une valeur courante de fréquence appliquées au circuit et correspondant au point de fonctionnement courant,

    b) déterminer au moins une nouvelle valeur de référence à appliquer à l'entrée d'au moins un des actionneurs, la nouvelle valeur de référence étant définie selon les valeurs courantes de tension et de fréquence du point de fonctionnement courant et selon la courbe de référence ; et

    c) appliquer la ou les nouvelle(s) valeur(s) de référence respectivement à l'actionneur concerné.

Ainsi, le circuit est contrôlé de manière à tenir compte simultanément de la fréquence et de la tension courantes.

La mise à jour de la tension et de la fréquence appliquées au circuit est par exemple exécutée de manière conjointe (ou simultanée).

Cette mise à jour conjointe est par exemple mise en œuvre lorsque le circuit mettant en œuvre le contrôle agit à la fois sur un actionneur de tension et sur un actionneur de fréquence. Le procédé comporte de plus une étape de limitation d'au moins l'une des variations de la tension et de la fréquence appliquées au circuit pour empêcher d'amener le point de fonctionnement courant hors du domaine de fonctionnement tension-fréquence associé au circuit, ou une étape de correction d'au moins l'une des variations de la tension et de la fréquence appliquées au circuit pour empêcher d'amener le point de fonctionnement courant hors du domaine de fonctionnement tension-fréquence associé au circuit.

Par exemple, ladite correction est une correction de type Proportionnel-Intégral-Dérivé.

Le procédé peut en outre comporter une étape de mise à l'échelle des signaux de mesure de tension et de fréquence afin de compenser une différence de temps de réponse à l'étape d'asservissement.

Par exemple, la mise à l'échelle comporte un sous-échantillonnage d'au moins l'un des signaux de mesure de tension et de fréquence.

Le procédé peut en outre comporter une étape de réglage final du point de fonctionnement du circuit pour l'amener du deuxième point de fonctionnement vers un point de fonctionnement final.

Ainsi, il est possible d'optimiser au maximum le point de fonctionnement d'arrivée en le rapprochant le plus possible de la frontière.

Par exemple, l'étape de réglage final comporte un réglage de la fréquence du circuit pour rapprocher le point de fonctionnement du circuit de ladite frontière.

Alternativement ou en combinaison, le procédé peut en outre comporter une étape de réglage initial du point de fonctionnement du circuit pour l'amener d'un point de fonctionnement initial vers le premier point de fonctionnement.

Ainsi, il est possible, par exemple, d'éloigner le point de fonctionnement de la frontière avant d'opérer l'asservissement. Cela peut permettre de mettre en œuvre l'asservissement de manière plus sûre par rapport à la frontière en limitant les risques de dépassement. Le réglage initial peut également permettre de se placer sur une courbe de référence souhaitée.

Par exemple, l'étape de réglage initial comporte un réglage de la tension du circuit pour éloigner le point de fonctionnement du circuit de ladite frontière.

Le procédé peut en outre comporter une étape de découplage de l'application de la fréquence de l'application de la tension au circuit préalablement auxdites étapes de réglage.

Ainsi, il est possible de faire les réglages de manière indépendante, sans contrainte d'évolution couplée.

Le procédé peut en outre comporter une étape de sélection de ladite courbe de référence parmi un ensemble de courbes de référence stockées en fonction d'au moins un paramètre de fonctionnement du circuit.

Ainsi, il est possible de choisir la courbe de référence par rapport à laquelle l'asservissement est effectué selon divers critères.

Le procédé peut en outre comporter une étape de calibrage pour définir ladite courbe de référence.

Le procédé peut en outre comporter une étape de calibrage pour modifier ladite courbe de référence.

Ainsi, il est possible d'adapter l'asservissement en fonction des conditions courantes de fonctionnement du circuit contrôlé.

Par exemple, la modification est effectuée en temps réel.

Par exemple, le procédé comporte en outre une étape de stockage de ladite courbe.

L'étape de calibrage peut par exemple être déclenchée en fonction d'au moins un paramètre de fonctionnement du circuit tel que :

- la température du circuit,
- un taux de fautes temporelles du circuit,
- un vieillissement du circuit,
- ou autre.

Le circuit peut par exemple avoir une architecture globalement asynchrone et localement synchrone.

Un **deuxième aspect** de l'invention concerne un programme d'ordinateur ainsi qu'un produit programme d'ordinateur et un support de stockage pour de tels programme et produit, permettant la mise en oeuvre d'un procédé selon le premier aspect de l'invention, lorsque le programme est stocké dans une mémoire d'un dispositif de contrôle d'un circuit électronique et exécuté par un processeur d'un tel dispositif.

Un tel programme d'ordinateur peut par exemple être mis en oeuvre par un calculateur implanté dans un circuit.

Un **troisième aspect** de l'invention concerne un dispositif de contrôle de circuit électronique comportant une unité de traitement configurée pour mettre en oeuvre un procédé selon le premier aspect.

Un **quatrième aspect** de l'invention concerne un circuit électronique de contrôle configuré pour mettre en œuvre un procédé selon le premier aspect. Par exemple, un tel circuit est contrôlé (ou commandé) par un dispositif selon le troisième aspect.

Par exemple, le circuit est un circuit intégré.

Le circuit peut comporter un module de contrôle pour asservir un point de fonctionnement tension-fréquence courant d'un circuit contrôlé par rapport à une courbe de référence d'un domaine de fonctionnement tension-fréquence associé au circuit contrôlé, pour amener le circuit contrôlé d'un premier point de fonctionnement à un deuxième point de fonctionnement, ladite courbe de référence reliant lesdits premier et deuxième points de fonctionnement selon une trajectoire optimale par rapport à une frontière dudit domaine de fonctionnement.

Par exemple, une « trajectoire optimale » permet en chaque point de maximiser la performance (en termes de nombre d'opérations par unité de temps) du point de fonctionnement transitoire sans violer les frontières du domaine de fonctionnement.

Selon une définition de la courbe de référence, pour une tension donnée du domaine de fonctionnement, la courbe de référence maximise la fréquence à l'intérieur dudit domaine de fonctionnement.

Le circuit peut en outre comporter :

- un premier module de mesure pour mesurer une valeur courante de tension appliquée au circuit contrôlé, et
- un deuxième module de mesure pour mesurer une valeur courante de fréquence appliquée au circuit contrôlé,

Le module de contrôle peut en outre être configuré pour déterminer une valeur de tension de référence correspondant à ladite valeur courante de fréquence sur ladite courbe de référence, et pour mettre à jour la tension appliquée au circuit contrôlé à partir de la valeur de fréquence de référence déterminée.

Le circuit peut en outre comporter :

- un premier module de mesure pour mesurer une valeur courante de la tension appliquée au circuit contrôlé, et
- un deuxième module de mesure pour mesurer une valeur courante de la fréquence appliquée au circuit contrôlé,

Le module de contrôle peut en outre être configuré pour déterminer une valeur de fréquence de référence correspondant à ladite valeur courante de tension sur ladite courbe de référence, et pour mettre à jour la fréquence appliquée au circuit contrôlé à partir de la valeur de tension de référence déterminée.

Le module de contrôle peut en outre être configuré pour mettre à jour conjointement la tension et la fréquence appliquées au circuit contrôlé.

Le circuit peut en outre comporter au moins un module de limitation pour limiter au moins l'une des variations de la tension et de la fréquence appliquées au circuit contrôlé pour empêcher d'amener le point de fonctionnement courant hors du domaine de fonctionnement tension-fréquence associé au circuit contrôlé.

Le circuit peut en outre comporter un module de correction pour corriger au moins l'une des variations de la tension et de la fréquence appliquées au circuit contrôlé pour empêcher d'amener le point de fonctionnement courant hors du domaine de fonctionnement tension-fréquence associé au circuit contrôlé.

Par exemple, ledit module de correction est de type Proportionnel-Intégral-Dérivé.

Le circuit peut en outre comporter un module de mise à l'échelle des signaux de mesure de tension et de fréquence afin de compenser une différence de temps de réponse à l'asservissement.

Par exemple, le module de mise à l'échelle comporte un sous-échantillonneur pour sous-échantillonner au moins l'un des signaux de mesure de tension et de fréquence.

Le module de contrôle peut en outre être configuré pour régler le point de fonctionnement du circuit contrôlé pour l'amener du deuxième point de fonctionnement vers un point de fonctionnement final.

Le module de contrôle peut en outre être configuré pour régler la fréquence du circuit contrôlé pour rapprocher le point de fonctionnement de ladite frontière.

Le module de contrôle peut en outre être configuré pour régler le point de fonctionnement pour amener le circuit contrôlé d'un point de fonctionnement initial vers le premier point de fonctionnement.

Le module de contrôle peut en outre être configuré pour régler la tension du circuit contrôlé pour éloigner le point de fonctionnement de ladite frontière.

Le circuit peut en outre comporter un module de déconnexion configuré pour découpler l'application de la fréquence de l'application de la tension au circuit contrôlé préalablement auxdits réglages.

Le module de contrôle peut en outre être configuré pour sélectionner ladite courbe de référence parmi un ensemble de courbes de référence stockées en fonction d'au moins un paramètre de fonctionnement du circuit contrôlé.

Le module de contrôle peut en outre comporter un module de calibrage configuré pour définir ladite courbe de référence lors d'un calibrage.

Le module de contrôle peut en outre comporter un module de calibrage configuré pour modifier ladite courbe de référence lors d'un calibrage.

Par exemple, la modification est effectuée en temps réel.

Le module de contrôle peut en outre être configuré pour stocker ladite courbe.

Par exemple, le calibrage est déclenché en fonction d'au moins un paramètre de fonctionnement du circuit contrôlé.

Par exemple, ledit au moins un paramètre est une température du circuit contrôlé.

Par exemple, ledit au moins un paramètre est un taux de fautes temporelles du circuit contrôlé.

Par exemple, ledit au moins un paramètre reflète un vieillissement du circuit contrôlé.

Le paramètre peut être déterminé à partir de l'évolution de grandeurs caractéristiques du circuit. Par exemple, il peut s'agir d'analyser l'évolution de la fréquence d'oscillation d'un oscillateur intégré dans le circuit. D'autres paramètres peuvent être envisagés.

Par exemple, le circuit contrôlé a une architecture globalement asynchrone et localement synchrone.

Les objets selon les deuxième, troisième et quatrième aspects de l'invention procurent au moins les mêmes avantages que ceux procurés par le procédé selon le premier aspect. Le dispositif selon le troisième aspect peut comporter des moyens pour la mise en œuvre de caractéristiques optionnelles évoquées pour le premier aspect en termes de procédé.

D'autres caractéristiques et avantages de l'invention apparaîtront à la lecture de la présente description détaillée qui suit, à titre d'exemple non limitatif, et des figures annexées parmi lesquelles, outre la figure 1 :

- La **figure 2** illustre une trajectoire optimale ;
- La **figure 3** illustre un réglage initial ;
- la **figure 4** illustre un réglage final;
- la **figure 5** illustre un schéma général de circuit selon des modes de réalisation ;
- la **figure 6** illustre une architecture de circuit selon le schéma de la figure 5 ;
- les **figures 7** à **11** illustrent les calculs effectués lors de l'asservissement ;
- la **figure 12** illustre des résultats de simulation ;
- les **figures 13** à **16** illustrent des variantes d'architecture ;
- la **figure 17** est un organigramme d'étapes mises en œuvre dans un procédé selon un mode de réalisation ; et
- la **figure 18** illustre schématiquement un dispositif selon un mode de réalisation de l'invention.

Avant de présenter une architecture de circuit de contrôle pour la mise en oeuvre de modes de réalisation de l'invention, certains principes pouvant être mise en œuvre sont présentés en référence aux figures 1 à 4.

Selon l'invention, le contrôle d'un circuit électronique est mis en œuvre en sorte à suivre une trajectoire optimale de fonctionnement du circuit pour passer d'un premier point de fonctionnement (V1, F1) à un deuxième point de fonctionnement (V2, F2). L'invention permet d'utiliser les capacités maximales du circuit, en termes de fréquence, même durant les transitoires.

L'asservissement du point de fonctionnement tension-fréquence (V, F) du circuit par rapport à cette trajectoire optimale est illustré par la **figure 2**, qui reprend les notations de la figure 1.

La trajectoire suivie est représentée par la flèche T3 et se rapproche au maximum de la frontière (Frontière 2) délimitant les fréquences maximales admises pour un fonctionnement du circuit dans la zone de fonctionnement. Idéalement, la trajectoire optimale est confondue avec cette frontière. Toutefois, afin de tenir compte des erreurs de définition de cette frontière (lors du calibrage du circuit ou pour tenir compte des aléas inhérents à la production des composants du circuit), une marge de sécurité peut être prévue entre cette frontière et la trajectoire optimale.

Le suivi de la trajectoire optimale permet d'obtenir pour la phase transitoire des performances maximales du circuit (en termes de nombre d'opérations par unité de temps) pour une consommation correspondante minimale, sans risquer de fautes temporelles.

Cette marge de sécurité peut dépendre de plusieurs paramètres, notamment la température du circuit, le vieillissement des composants, les variations lentes de la tension d'alimentation, la variabilité du processus de fabrication des composants ou autre.

Ainsi, il est possible de prévoir plusieurs courbes optimales selon ces paramètres.

Ces différentes courbes optimales peuvent par exemple être définies lors de phases de calibrage ou de recalibrage du circuit de contrôle. Cela peut permettre de s'adapter aux phénomènes évoqués ci-dessus.

Pour éviter de dépasser les frontières du domaine de fonctionnement (ou zone fonctionnelle dans la figure 2) lors de l'asservissement, par exemple lors de phases de fonctionnement critiques du circuit pour lesquelles un dépassement serait fatal, il peut être prévu de réaliser une étape préliminaire consistant à introduire la marge de sécurité comme illustré par la **figure 3** qui reprend les notations de la figure 2.

Cette étape préliminaire consiste par exemple à amener le point de fonctionnement du circuit d'un point de fonctionnement courant (ou initial) (V1, F1) vers un point de fonctionnement (V1', F1) d'une courbe de référence T4 afin de l'éloigner de la frontière (Frontière 2). Ensuite, le point de fonctionnement du circuit est asservi entre les points (V1', F1) et (V2, F2).

Cette étape préliminaire peut servir à prendre une marge de sécurité par rapport à la frontière du domaine de fonctionnement. Elle peut également servir à se positionner sur une courbe de référence choisie en fonction de paramètres de fonctionnement du circuit tels que la température, le vieillissement ou autre.

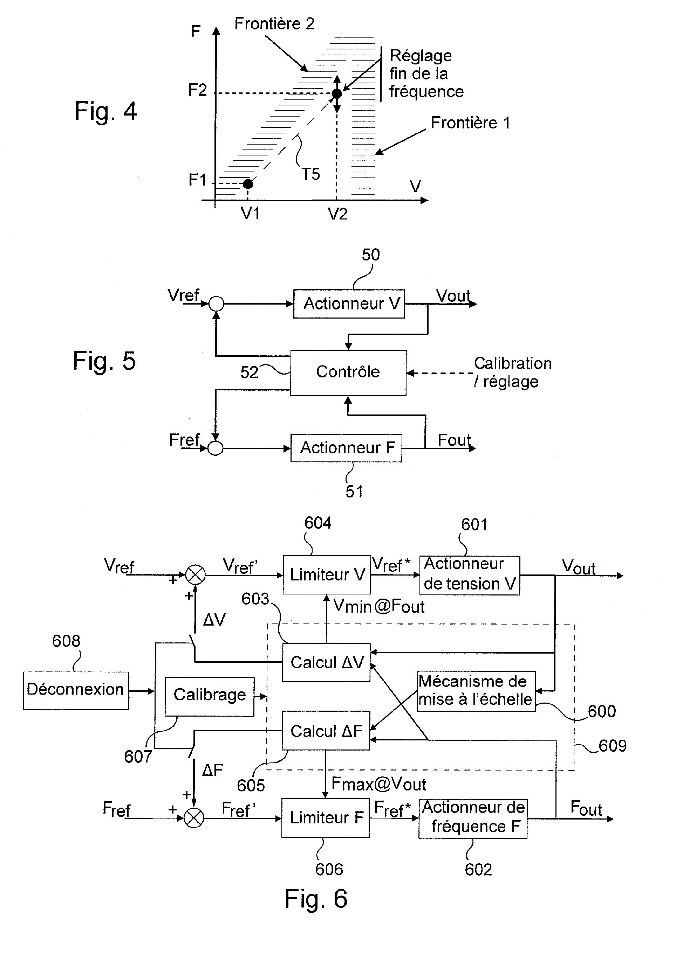

Afin d'amener le circuit vers un point de fonctionnement le plus optimal possible ou pour écarter ce point de fonctionnement de la frontière, il peut être prévu une étape finale de réglage fin du point de fonctionnement, comme illustré par la **figure 4** qui reprend les notations de la figure 2. Cette étape finale est mise en œuvre après l'asservissement du point de fonctionnement entre les points (V1, F1) et (V2, F2).

Cette étape finale consiste par exemple à amener le circuit d'un point extrémal (V2, F2) d'une courbe de référence T5 vers un point de fonctionnement final en augmentant ou en diminuant finement la fréquence pour arriver vers un point de fonctionnement final qui est, au choix, plus proche de la frontière ou un peu plus éloigné de celle-ci.

D'une manière générale, lors de l'asservissement du point de fonctionnement ou des réglages initial et final, le contrôle de la tension peut être déconnecté du contrôle de la fréquence afin de pouvoir s'écarter quelque peu de la courbe de référence si nécessaire. Dans ce cas, le circuit de contrôle mettant en œuvre l'asservissement découple le contrôle de la tension de celui de la fréquence, jusqu'à arriver au point de fonctionnement voulu. Le contrôle peut alors s'effectuer selon des techniques connues comme par exemple selon le document Beigné et al. « An Innovative Local Adaptive Voltage Scaling Architecture for On-chip Variability Compensation" NEWCAS 2011, 26 - 29 Juin, 2011, Bordeaux, France.

Après avoir présenté quelques principes généraux pouvant être mis en œuvre pour mettre en œuvre l'invention, une architecture de circuit est présentée dans ce qui suit.

Tout d'abord, un schéma général d'un circuit de contrôle pour mettre en œuvre un asservissement du point de fonctionnement selon l'invention est représenté sur la **figure 5**.

Le circuit comporte un actionneur de tension 50 et un actionneur de fréquence 51 pour appliquer respectivement une tension $V_{OUT}$ et une fréquence $F_{OUT}$ au circuit électronique contrôlé, ou commandé (non représenté).

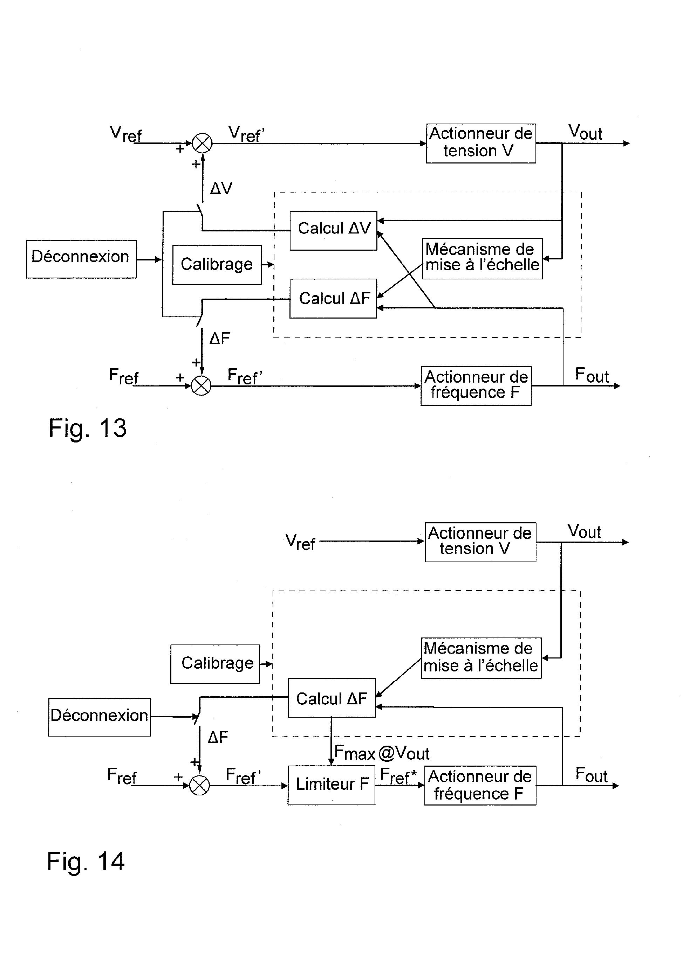

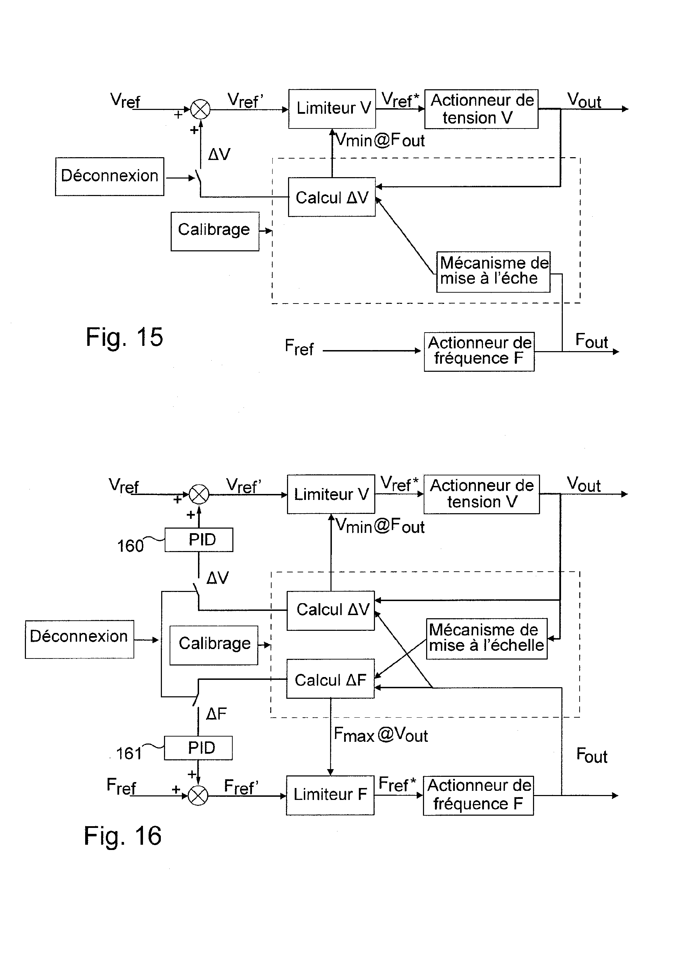

Ces actionneurs prennent respectivement en entrée une tension de référence $V_{ref}$ et une fréquence de référence $F_{ref}$ qui peuvent être corrigées par un module de contrôle 52. Ce module de contrôle peut agir sur l'un ou l'autre des actionneurs ou sur les deux à la fois (contrôle conjoint, ou couplage), via par exemple une modification des grandeurs de référence. Ainsi, le module 52 peut avoir deux sorties respectives vers chacun des actionneurs comme représenté sur la figure 5 ou alors n'avoir qu'une seule sortie vers l'un de ces actionneurs (cette variante est présentée en fin de description en référence aux figures 14 et 15)

Le module de contrôle reçoit comme entrées la tension de sortie de l'actionneur de tension et la fréquence de sortie de l'actionneur de fréquence. Il peut également recevoir d'autres paramètres concernant le calibrage (définition des courbes de référence, déclenchement d'un tel calibrage, ou autre), le réglage du point de fonctionnement du circuit, la déconnexion du circuit de contrôle par rapport au circuit contrôlé durant le contrôle et/ou le calibrage ou autre.

Les dynamiques respectives des actionneurs, c'est-à-dire notamment leurs temps de réponse respectifs, peuvent être différentes (on parle alors de système multi-échelles). Ils peuvent être tous les deux régis par des lois de contrôle interne à temps continu ou à temps discret. Dans le cas où un actionneur est « à temps continu » et l'autre « à temps discret », on parle de système hybride.

La **figure 6** illustre une architecture de circuit de contrôle qui reprend le schéma de la figure 5.

Ce circuit peut comporter un module de mise à l'échelle 600. Ce bloc peut permettre de compenser les dynamiques différentes des deux actionneurs de tension et de fréquence 601 et 602, lorsqu'un actionneur répond avec un transitoire très court par rapport au transitoire de l'autre actionneur. Dans l'exemple de la figure 6, il est considéré que l'actionneur de tension a une dynamique très rapide par rapport à la dynamique de l'actionneur de fréquence. Ainsi, ce module sous-échantillonne la sortie de l'actionneur de tension. Toutefois, un sous-échantillonnage, ou tout autre mécanisme de compensation, pourrait être appliqué à l'actionneur de fréquence.

Un exemple d'utilisation d'un tel module de mise à l'échelle est un contexte où l'un des actionneurs est continu (par exemple un variateur DC-DC pour l'actionneur de tension) et l'autre est discret, i.e. échantillonné (par exemple une DFLL, sigle de « *Digital Frequency Locked-Loop* », comme dans le document Lesecq et al., Low-Cost and Robust Control of a DFLL for Multi-Processor System-On-Chip, IFAC World Congress, 2011. Le mécanisme de mise à l'échelle sert dans ce cas à échantillonner la sortie de l'actionneur continu pour le rendre discret. L'implémentation du contrôle peut alors être entièrement discrète (c'est-à-dire échantillonnée) grâce au bloc de mise à l'échelle, permettant ainsi une implémentation purement numérique de la commande.

Un bloc de contrôle de tension 603 permet d'asservir la tension selon la courbe de référence. Ce bloc reçoit en entrée la tension de sortie de l'actionneur de tension (éventuellement mise à l'échelle) et la fréquence de sortie de l'actionneur de fréquence (éventuellement mise à l'échelle), et calcule deux sorties.

Une première sortie est un signal qui représente une variation de tension (ΔV) à appliquer au signal de référence ($V_{ref}$) pour adapter la consigne donnée à l'actionneur de tension à celle donnée à l'actionneur de fréquence. Ce signal (ΔV) est généré à partir des sorties courantes des deux actionneurs ($V_{OUT}$ ou $F_{OUT}$) et de la courbe de référence à suivre. Il s'agit de calculer la valeur ΔV comme la tension Vi que l'actionneur de tension devrait fournir en sortie selon la courbe de référence pour la fréquence de sortie courante mesurée ($F_{OUT}$), moins la tension de sortie courante $V_{OUT}$.

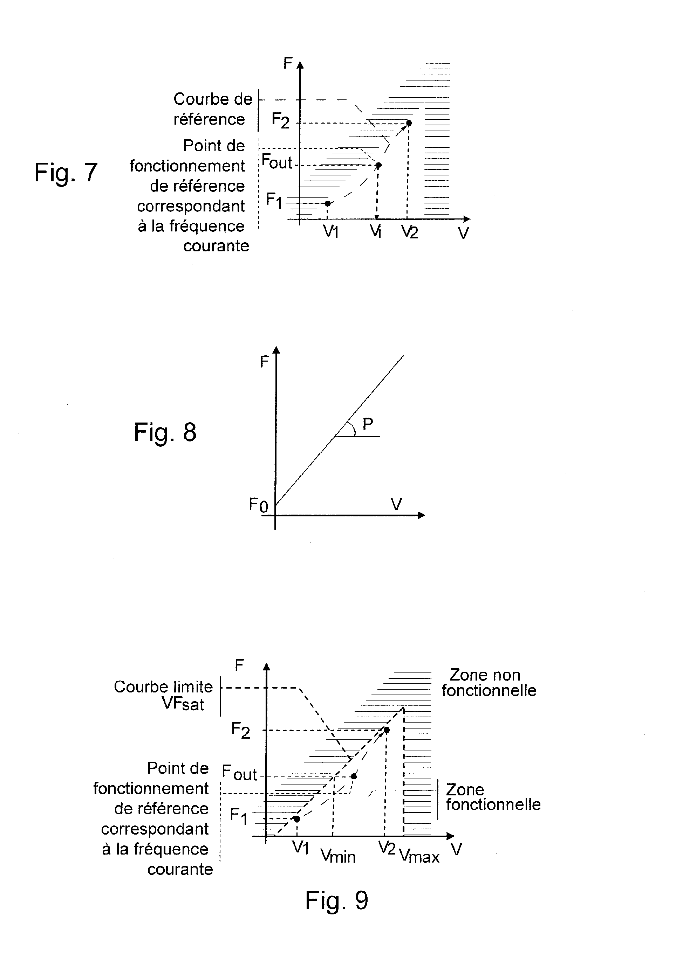

Le calcul de la tension Vi utilisé pour obtenir ΔV est décrit ci-après en référence à la **figure 7** qui reprend les notations de la figure 2 et à la **figure 8**.

La figure 7 illustre le choix de la valeur Vi qui correspond à la valeur de la fréquence courante sur la courbe de référence du circuit.

Comme illustré par la figure 7, la courbe de référence peut avoir une allure quelconque, toutefois, dans un souci de clarté de l'exposé, cette courbe est simplifiée dans la figure 8 dans laquelle elle est présentée par une ligne droite.

Dans ce cas, les valeurs Pi et $F_0$ sont deux constantes qui définissent la droite, $P_i$ = 1/*P* étant l'inverse de la pente P de la droite et $F_0$ étant la valeur de la fréquence lorsque la droite intersecte l'axe des ordonnées.

Pour une valeur de fréquence de sortie mesurée $F_{OUT}$, la valeur de tension Vi correspondante selon la courbe de la figure 8, est :

$$V_i = P_i\left(F_{out} - F_0\right) \tag{1}$$

La valeur de ΔV est la différence entre Vi et $V_{OUT}$ comme suit :

$$\Delta V = V_i - V_{out} = P_i\left(F_{out} - F_0\right) - V_{out} \tag{2}$$

Le signal généré ΔV est additionné à la tension de référence $V_{ref}$ afin de modifier cette dernière, qui devient alors la nouvelle référence $V_{ref}'$ :

$$V_{ref}' = V_{ref} + \Delta V \tag{3}$$

De retour à la figure 6, la deuxième sortie du bloc 603 correspond à la limite inférieure de tension $V_{min}$ pour une fréquence de sortie mesuré $F_{OUT}$ (cette limite est désignée par « $V_{min}@F_{out}$ » dans la figure 6). Cette valeur représente la tension minimale que l'on peut appliquer à l'actionneur de tension sans sortir du domaine de fonctionnement du circuit délimité par les frontières. Elle est calculée comme suit :

$$V_{min} = P_{i,sat}\left(F_{out} - F_{0,sat}\right) \tag{4}$$

où $P_{i,sat}$ et $F_{0,sat}$ sont deux constantes qui définissent la droite limite, i.e. une courbe VFsat à ne pas dépasser. Dans un cas simple, cette courbe peut être confondue avec la courbe de référence, i.e. :

$$\begin{aligned} P_{i,sat} &= P_i \\ F_{0,sat} &= F_0 \end{aligned} \tag{5}$$

Dans d'autres cas, la droite (ou courbe) limite se confond avec la frontière du domaine de fonctionnement. Il est également possible d'envisager une courbe limite qui tienne compte de paramètres du circuit pour laisser une marge de sécurité avec la frontière.

La valeur de la limite est fournie à un bloc limiteur de tension 604 qui reçoit aussi en entrée la valeur de consigne $V_{ref}$'. Ce bloc applique des saturations à la tension de référence $V_{ref}$' pour obtenir $V_{ref}$*.

L'entrée $V_{ref}$' est limitée pour rester entre des valeurs $V_{max}$ et $V_{min}$. La valeur de tension maximale ($V_{max}$) dépend de la technologie et elle n'est pas représentée dans le schéma de la figure 6. La valeur $V_{min}$ correspond à la tension minimale fonctionnelle pour la fréquence mesurée $F_{OUT}$. Elle assure que la tension de référence ($Vref$*) appliquée à l'actionneur de tension ne fasse pas entrer le système dans la zone non-fonctionnelle (c'est-à-dire hors du domaine de fonctionnement) comme représenté sur la **figure 9**.

De retour à la figure 6, un bloc de contrôle de fréquence 605 permet d'asservir la fréquence selon la courbe de référence. Ce bloc reçoit en entrée la tension de sortie de l'actionneur de tension (éventuellement mise à l'échelle) et la fréquence de sortie de l'actionneur de fréquence (éventuellement mise à l'échelle), et calcule deux sorties.

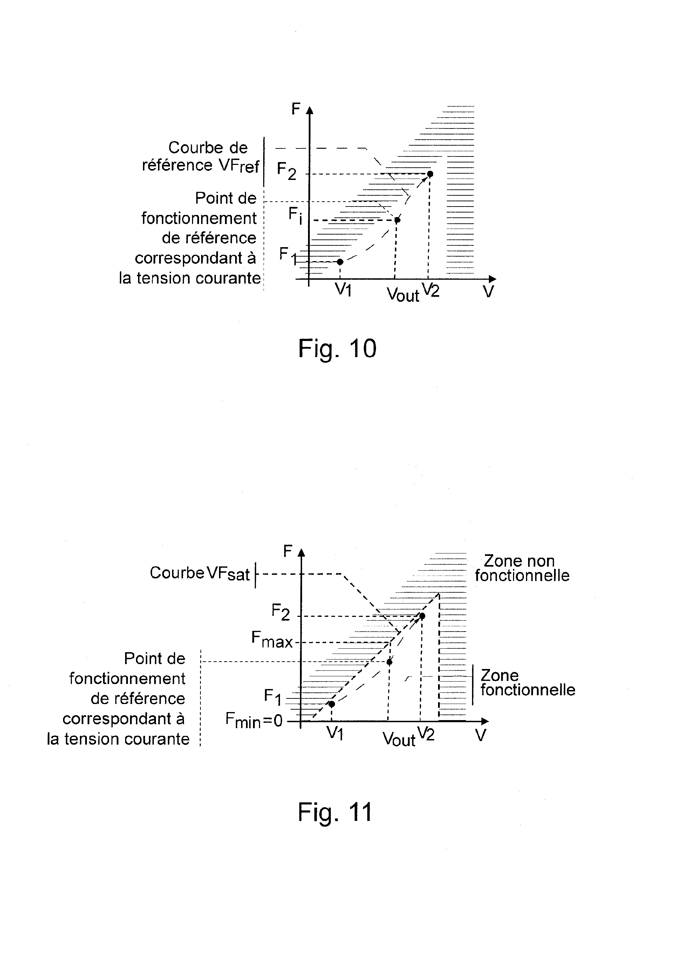

La première sortie correspond à un signal de variation de fréquence ($\Delta F$) à appliquer au signal de référence ($F_{ref}$) pour adapter l'allure de l'actionneur de fréquence à celle de l'actionneur de tension. Ce signal ($\Delta F$) est généré à partir de la sortie courante des deux actionneurs ($V_{OUT}$, $F_{OUT}$) et de la courbe de référence à suivre. Il s'agit de calculer la valeur $\Delta F$ comme la fréquence Fi que l'actionneur de fréquence devrait fournir selon la courbe de référence pour la tension de sortie courante mesurée ($V_{OUT}$), moins la fréquence de sortie $F_{OUT}$. La valeur Fi utilisée pour obtenir $\Delta F$ est illustrée par la **figure 10**.

En reprenant le modèle décrit en référence à la figure 8, la courbe de référence VFref est une ligne droite décrite par :

$$F_i = F_0 + P \cdot V_{out} \qquad (6)$$

La valeur $\Delta F$ est calculée comme la différence entre Fi et $F_{OUT}$ comme suit :

$$\Delta F = F_i - F_{out} = F_0 + P \cdot V_{out} - F_{out} \qquad (7)$$

La deuxième sortie du bloc de contrôle de fréquence correspond à la limite supérieure de fréquence $F_{max}$ pour une tension de sortie mesurée $V_{OUT}$ (désignée par « $F_{max}@V_{out}$ » dans la figure 6). Cette valeur représente la fréquence maximale que l'on peut appliquer à l'actionneur de fréquence sans sortir du domaine de fonctionnement du circuit (zone fonctionnelle). Elle est calculée comme suit :

$$F_{max} = F_{0,sat} + P_{sat} \cdot V_{out} \qquad (8)$$

où $P_{sat}$ et $F_{0,sat}$ sont deux constantes qui définissent la droite (courbe) limite VFsat à ne pas dépasser. Dans un cas simple, cette courbe peut être égale à la courbe de référence VFref, i.e. :

$$\begin{aligned} P_{sat} &= P \\ F_{0,sat} &= F_0 \end{aligned} \qquad (9)$$

Dans d'autres cas, la droite (ou courbe) limite se confond avec la frontière du domaine de fonctionnement. Il est également possible d'envisager une courbe limite qui tienne compte de paramètres du circuit pour laisser une marge de sécurité avec la frontière.

La valeur de la limite est fournie à un bloc limiteur de fréquence 606 qui reçoit aussi en entrée la valeur de consigne $F_{ref}$'. Ce bloc applique des limites à la fréquence de référence $F_{ref}$' pour obtenir $F_{ref}$*.

L'entrée $F_{ref}$' est limitée pour rester entre $F_{max}$ et $F_{min}$. La valeur de fréquence minimale ($F_{min}$) dépend de l'actionneur présent dans le système. Elle peut être considérée comme égale à zéro ($F_{min}=0$) et elle n'est pas représentée dans la figure 6. La valeur $F_{max}$ correspond à la fréquence maximale fonctionnelle pour la tension mesurée $V_{OUT}$. Au-delà de cette limite, le circuit contrôlé (système logique) peut produire des fautes temporelles (ou logiques). Elle assure que la référence de fréquence ($F_{ref}$*) appliquée à l'actionneur de fréquence n'amènera pas déplacer le système hors du domaine de fonctionnement comme illustré sur la **figure 11**.

De retour à la figure 6 un bloc de calibrage 607 permet de choisir/modifier la courbe de référence qui doit être suivie dans le plan V-F afin de garantir un point de fonctionnement optimal (i.e. performance maximale, pour une consommation minimale de puissance) tout au long de la transition d'un point de fonctionnement (F1,V1) à un autre (F2,V2) et inversement.

Modifier la courbe de référence (par exemple le couple (P, F0) dans le cas d'une droite) permet de s'adapter notamment à la variabilité de processus de fabrication, à des variations lentes de la tension d'alimentation ou à des variations de la température du circuit.

Par exemple, une mesure de la température T du circuit permet de décider d'activer le mécanisme de calibrage. En fonction de la température relevée, la courbe de référence est modifiée. Les différentes courbes de référence sont par exemple mises en mémoire dans une table LUT (sigle de « *Look-up table* » en anglais).

Le mécanisme de calibrage peut permettre de modifier en cours de fonctionnement la courbe de référence afin d'avoir une marge de sécurité par rapport à la frontière.

Le module de calibrage peut en outre contenir une fonction qui lance de manière automatique l'identification de la courbe de référence et les paramètres de la mise à l'échelle. Ce déclenchement peut être piloté par des informations externes, par exemple la température, le nombre de fautes temporelles du circuit contrôlé ou autre. Un tel pilotage peut être mis en œuvre conformément au document Rebaud et al., « Timing slack monitoring under process and environmental variations: Application to a DSP performance optimization ». Microelectronics Journal 2011).

En ce qui concerne le mécanisme de calibrage à proprement parler, la personne du métier peut se référer à des mécanismes connus qui ne font pas l'objet de la présente description.

Un module 608 de déconnection permet de découpler le contrôle de la tension du contrôle de la fréquence, par exemple pour permettre un réglage de la fréquence et/ou de la tension, quand le système est suffisamment proche du point de fonctionnement désiré (cf. réglage final évoqué ci-avant). Lorsque la déconnection est mise en œuvre, chaque actionneur a un comportement indépendant. On peut alors prendre quelques libertés par rapport à la courbe de référence pour choisir le point de fonctionnement final. La tension et la fréquence sont modifiées dans un ordre adéquat afin d'éviter les fautes temporelles comme dans un système AVFS (sigle anglais pour « *Adaptive Voltage and Frequency scaling*) classique.

La déconnexion peut également permettre de se ramener à un schéma traditionnel de contrôle DVFS, sous contrainte de garantir un ordre adéquat de modification de la tension et de la fréquence afin d'éviter les fautes temporelles.

On peut noter que l'ensemble 609 formé par les modules 600, 603 et 605 peut former un module de contrôle comme évoqué en référence à la figure 5.

Le contrôle tel qu'évoqué ci-avant peut être implémenté de manière numérique avec un dispositif matériel contrôlé par un programme d'ordinateur.

Toutefois, le contrôle peut être envisagé dans un contexte analogique.

Dans de tels contextes, le contrôle peut être sensible aux variations de température. En effet, les différents composants mis en œuvre pour implémenter le contrôle pourraient être sensibles à la température. Le bloc de calibrage 607 décrit en référence à la figure 6 peut alors être configuré pour recaler la courbe de référence afin que le contrôle appliqué soit celui désiré.

La température peut modifier le comportement des actionneurs en tension et en fréquence, notamment leur dynamique. Le bloc de calibrage peut être utilisé pour compenser cette différence de dynamique en recalant le mécanisme de mise à l'échelle.

Après avoir présenté une architecture de circuit, le contrôle tension fréquence est abordé du point de vue automatique. Des résultats de simulation sont ensuite présentés.

D'une manière générale, lorsque la tension et la fréquence sont contrôlées de manière conjointe, il est possible de faire une gestion autonome et stable (au sens de la théorie du contrôle) des deux signaux de tension et fréquence. La gestion est autonome en ce que le système évolue d'un point de fonctionnement à un autre point de fonctionnement, en suivant la courbe de référence désirée, et en changeant les valeurs des références de la tension et la fréquence.

Le contrôle conjoint peut reposer sur la théorie du contrôle par consensus tel que résumé par exemple dans le document Olfati-Saber et al., "Consensus and Coopération in Networked Multi-Agent Systems", Proceedings of the IEEE, Vol. 95:1, pp. 215-233, Janvier 2007.

Selon cette théorie, les systèmes à contrôler par consensus sont représentés par des agents présentant la dynamique

$$\dot{x}_i = u_i, \quad i = 1 : n$$

dans un réseau. L'objectif est d'atteindre un consensus via des communications locales avec les voisins sur un graphe. « Atteindre un consensus » signifie qu'asymptotiquement, chaque agent converge vers un point commun, i.e. $x_1 = x_2 = ... = x_n$. En pratique la plupart des travaux de la littérature considèrent que le consensus à l'équilibre est une constante ou une moyenne pondérée des conditions initiales.

Selon des travaux de la littérature, les agents peuvent avoir des modèles dynamiques.

En fait, le problème considéré ici est plus général puisque les agents doivent suivre une référence désirée. En outre leur modèle dynamique n'est pas un simple intégrateur. Ainsi, on peut utiliser les résultats fournis par le document Fax et al., « Information Flow and Cooperative Control of Vehicle Formations », IEEE Transactions on Automatic Control, Vol. 49:9, Septembre 2004.

Dans le cas où les actionneurs ont des dynamiques de nature différentes, il faut réaliser un changement de variable (ce qui en pratique est fait dans les calculs de $\Delta V$ et $\Delta F$). Ainsi, chaque système (actionneur de fréquence ou actionneur de tension) peut être modélisé par

$$\dot{x}_i = P_A x_i + P_B u_i$$

$$y_i = P_{C_1} x_i$$

$$z_{ij} = P_{c_2}\left(x_i - x_j\right) \quad i \neq j$$

avec i = 1 ou i = 2. Le consensus est dit asymptotiquement réalisable, selon le document Wang et al., « Consensus of High Order Linear Multi-agent Systems Using Output Error Feedback », Joint 48th IEEE Conférence on Decision and Control and 28th Chinese Control Conférence Shanghai, P.R. China, 16-18 Décembre 2009, si $\lim\limits_{t \to \infty}\left\|x_1 - x_2\right\| = 0$

(définition 3 du document précité, adapté à deux agents).

Une rétroaction, est alors construite, sur l'erreur entre états $x_i$, comme dans le document Wang et al., « Consensus Of Multi-Agent Linear Dynamic Systems », Asian Journal of Control, Vol. 10:2, pp. 144 - 155, Mars 2008 (ce qui revient de facto à faire un contrôle par retour « d'erreur d'état », et non par retour « d'état » comme c'est classiquement le cas) :

$$u_i = K\left(x_i - x_j\right)$$

(ici encore adapté à deux agents).

La matrice d'interconnexion des agents est ensuite définie selon

$$L_G = \begin{bmatrix} 1 & -1 \\ -1 & 1 \end{bmatrix}.$$

Compte tenu de ses propriétés particulières (valeurs propres égales respectivement à 0 et 2) et du fait que le graphe d'interconnexion est complet (i.e. chaque agent/système est connecté à l'autre), la stabilisation du système global revient en pratique à stabiliser par un retour d'erreur $u_i = K(x_i - x_j)$, K < 0 l'un des systèmes évoqués dans le document Fax et al. précité.

C'est la solution qui s'applique, compte tenu de la correction appliquée (c'est-à-dire le contrôle particulier appliqué), cf. équations (2) ou (7) et la figure 6. Les valeurs de référence et le décalage (offset) $F_0$ introduits précédemment ne changent pas le raisonnement quant à la stabilité du système avec contrôle par consensus (dans la littérature, l'offset est dénommé « biais »).

En outre, il est possible de régler la dynamique (qui a un lien direct avec la rapidité avec laquelle l'erreur entre la référence et la sortie obtenue tend vers zéro) en agissant sur le coefficient K.

L'étude menée ici avec l'approche de contrôle par consensus, compte tenu du système considéré, peut se ramener à une simple étude d'un système multivariable contrôlé « par retour par erreur d'état » (et non par retour d'état comme c'est traditionnellement le cas). Il faut alors régler le contrôleur (par retour d'état) afin de garantir la stabilité (et la robustesse) du système multivariable contrôlé. La stabilité du système multivariable rebouclé est garantie par la position des pôles du système rebouclé

Enfin, l'étude de stabilité peut également être menée à partir de la théorie de Lyapunov présentée dans le document H. Khalil, « Non-linear Systems » Prentice Hall, 2002.

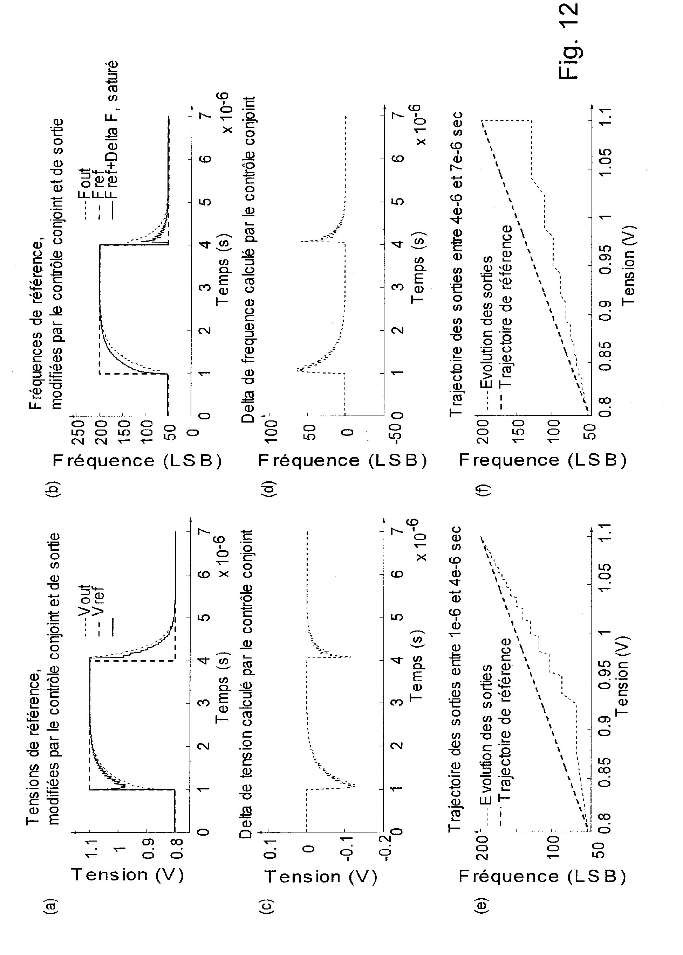

La **figure 12** présente des résultats de simulation dans un environnement MATLAB® /Simulink®, d'un système comportant :

- un actionneur de tension réalisé avec un système $V_{dd}$-hopping selon le document Albea-Sanchez et al., « Control and Stability Analysis for the Vdd-hopping Mechanism », IEEE MSC, Conférence on Control and Applications, 2009, et
- un actionneur de fréquence réalisé avec une boucle à verrouillage de fréquence selon le document Lesecq et al., « Low-Cost and Robust Control of a DFLL for Multi-Processor System-On-Chip », 18th IFAC World Congress, 28 août - 2 septembre 2011.

Le contrôle conjoint tel que présenté ci-avant est implémenté. La courbe de référence est illustrée dans les graphes tension-fréquence (e) et (f). Les autres graphes de la figure 12 montrent de manière générale l'évolution des signaux appliqués aux actionneurs de tension et fréquence et les sorties $V_{OUT}$ et $F_{out}$.

Contrairement aux approches classiques de DVFS, la tension V et la fréquence F évoluent conjointement, et non l'une après l'autre, sans dépasser la courbe de référence.

Après avoir présentés les résultats de simulation, des variantes de réalisation sont présentées.

La présente invention peut s'appliquer à tout type d'actionneur de tension V et d'actionneur de fréquence F dans un domaine de fonctionnement tension-fréquence dans le contexte de la diminution de la puissance consommée sans perte de performance.

Plusieurs situations impliquant un (re-)calibrage de la courbe de référence ou du mécanisme de mise à l'échelle peuvent être considérés.

Ainsi, comme évoqué plus haut, la décision de recalibrage de la courbe peut être prise à partir d'une mesure de température, de la détection d'un défaut temporel, ou autre.

Une procédure externe peut également lancer la phase de recalibrage, par exemple lorsque le comportement attendu n'est pas constaté, ou que le matériel a vieilli.

Dans un exemple utile pour comprendre l'invention, mais qui ne rentre pas dans le cadre des présentes revendications, représenté dans la **figure 13**, les blocs de limitation 604 et 605 de la figure 6 sont omis. Ce type de solution peut être mis en oeuvre dans les applications pour lesquels des dépassements (de la courbe de référence) peuvent être tolérés.

Selon d'autres exemples de réalisation, une seule branche de contrôle est mise en oeuvre. Il n'y a donc pas de contrôle conjoint.

La **figure 14** représente l'exemple d'un contrôle unique sur l'actionneur de fréquence pour asservir le point de fonctionnement du circuit contrôlé sur la courbe de référence.

Du point de vue de la théorie du contrôle par consensus, cela se traduit par un graphe de connexion directionnel.

La **figure 15** représente l'exemple d'un contrôle unique sur l'actionneur de tension pour asservir le point de fonctionnement du circuit contrôlé sur la courbe de référence.

Dans une autre variante de l'invention, le signal de sortie des blocs de contrôle de tension et de fréquence 603 et 605 (relatifs au calcul de $\Delta V$ et de $\Delta F$), peut être connecté à un filtre correcteur (ou contrôleur) de type PID (acronyme de « Proportionnel Intégral Dérivé ») classique. Cette variante est représentée dans la **figure 16**. Les blocs 160 et 161 sont les filtres correcteurs pour les variations $\Delta V$ et $\Delta F$ respectivement. L'avantage de cette implémentation est une amélioration possible de la dynamique du suivi de la trajectoire par les filtres PID.

Ici encore, le réglage du filtre peut être abordé par le biais du contrôle multivariable et de la matrice de couplage telle que définie ci-avant.

Bien entendu, des combinaisons des variantes évoquées ci-avant sont possibles. Par exemple, le contrôle unique peut se faire sans limiteur et avec un correcteur PID. Un contrôle conjoint peut se faire sans limiteur et avec des correcteurs. On peut n'utiliser qu'un seul limiteur et/ou qu'un seul correcteur. Toutes les autres combinaisons sont possibles.

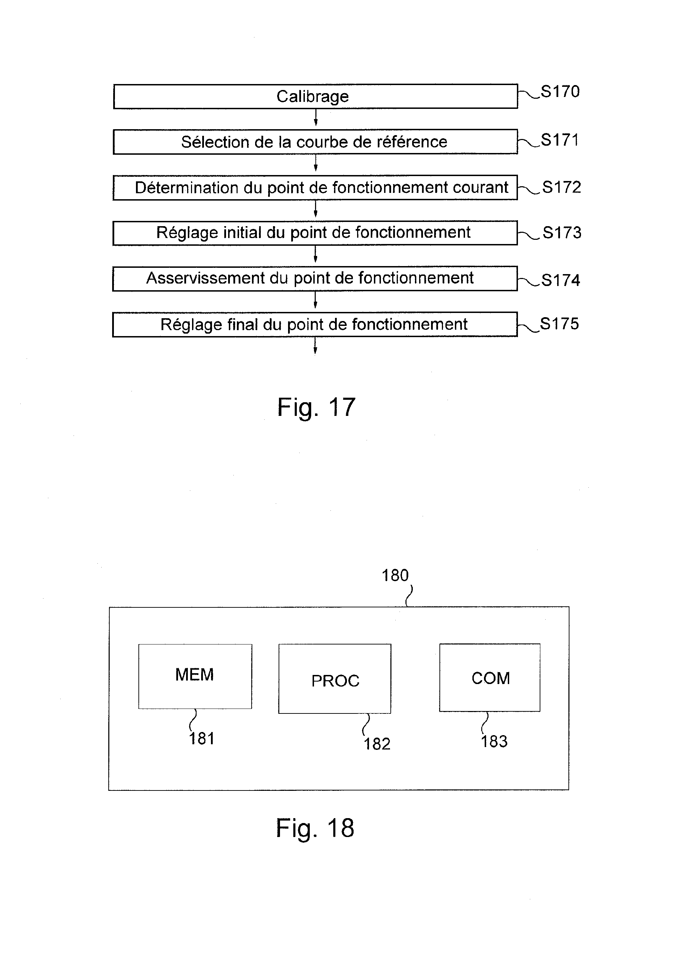

La **figure 17** est un organigramme général d'étapes mises en oeuvre dans un procédé de contrôle selon un mode de réalisation.

Lors d'une première étape S170 un calibrage est mise en œuvre pour définir et/ou modifier la courbe de référence du circuit contrôlé.

La courbe de référence à utiliser est ensuite sélectionnée lors de l'étape S171, par exemple en fonction de paramètres tels que la température, le vieillissement ou autre.

Le point de fonctionnement courant est alors déterminé par mesure de la fréquence et de la tension courante lors de l'étape S172.

Pour amener le circuit du point de fonctionnement courant vers le point de fonctionnement souhaité, une étape de réglage initial S173 est mise en œuvre, comme expliqué ci-avant. L'asservissement est ensuite mis en œuvre lors de l'étape S174 pour garder le point de fonctionnement sur une trajectoire optimale comme déjà expliqué.

Enfin, une étape S175 de réglage final du point de fonctionnement est mise en œuvre pour amener le circuit vers le point de fonctionnement souhaité.

Un programme d'ordinateur pour la mise en œuvre d'un procédé selon un mode de réalisation de l'invention peut-être réalisé à partir de l'organigramme de la figure 17 et de la présente description détaillée.

Pour contrôler la mise en œuvre du procédé, notamment pour contrôler les divers modules du circuit de contrôle, un module de commande schématiquement représenté sur la **figure 18** peut être utilisé.

Le module de commande 180 de la figure 18 comporte une unité de mémoire 181 (MEM). Cette unité de mémoire comporte une mémoire vive pour stocker de manière non durable des données de calcul utilisées lors de la mise en œuvre d'un procédé conforme à l'invention, selon divers modes de réalisation. L'unité de mémoire comporte par ailleurs une mémoire non volatile (par exemple du type EEPROM) pour stocker par exemple un programme d'ordinateur, selon un mode de réalisation, pour son exécution par un processeur (non représenté) d'une unité de traitement 182 (PROC). Par exemple, l'unité de mémoire stocke les différentes courbes de références dans une table (« Look-up table »). Le module de commande comporte par ailleurs une unité de communication 183 (COM) pour mettre en œuvre des communications, notamment pour envoyer des signaux de commande vers les divers modules du circuit de contrôle.

Bien entendu, la présente invention ne se limite pas aux formes de réalisation décrites, d'autres variantes et combinaisons de caractéristiques sont possibles.

La présente invention a été décrite et illustrée dans la présente description détaillée en référence aux figures jointes. Toutefois la présente invention ne se limite pas aux formes de réalisation présentées. D'autres variantes et modes de réalisation peuvent être déduits et mis en œuvre par la personne du métier à la lecture de la présente description et des figures annexées.

Dans les revendications, le terme "comporter" n'exclut pas d'autres éléments ou d'autres étapes. L'article indéfini « un » n'exclut pas le pluriel. Un seul processeur ou plusieurs autres unités peuvent être utilisées pour mettre en œuvre l'invention. Les différentes caractéristiques présentées et/ou revendiquées peuvent être avantageusement combinées. Leur présence dans la description ou dans des revendications dépendantes différentes, n'exclut pas en effet la possibilité de les combiner. Les signes de référence ne sauraient être compris comme limitant la portée de l'invention.

**Revendications**

**1.** Procédé de contrôle d'un circuit électronique, pour amener le circuit d'un premier point de fonctionnement tension-fréquence ((V1, F1) (V1', F1)) à un deuxième point de fonctionnement tension-fréquence (V2, F2), chaque point de fonctionnement tension-fréquence étant défini par une tension et une fréquence appliquées respectivement par un actionneur de tension et un actionneur de fréquence, ces actionneurs prenant en entrée une valeur de référence, respectivement de tension ou de fréquence,

**caractérisé en ce qu'**il comporte une étape d'asservissement (S174) d'un point de fonctionnement tension-fréquence (V, F) courant par rapport à une courbe de référence (T3, T4, T5) d'un domaine de fonctionnement tension-fréquence associé au circuit, ladite courbe de référence reliant lesdits premier et deuxième points de fonctionnement selon une trajectoire optimale par rapport à une frontière dudit domaine représentant, pour chaque valeur de tension admissible par le circuit, la fréquence maximale autorisée, la courbe de référence suivant ladite frontière en s'en rapprochant au maximum avec une marge de sécurité, l'asservissement comprenant la répétition des étapes suivantes une pluralité de fois pendant la transition du premier point de fonctionnement au deuxième point de fonctionnement :

a) mesurer une valeur courante de tension et une valeur courante de fréquence appliquées au circuit et correspondant au point de fonctionnement courant,
b) déterminer au moins une nouvelle valeur de référence à appliquer à l'entrée d'au moins un des actionneurs, la nouvelle valeur de référence étant définie selon les valeurs courantes de tension et de fréquence du point de fonctionnement courant et selon la courbe de référence ; et
c) appliquer la ou les nouvelle(s) valeur(s) de référence respectivement à l'actionneur concerné,

le procédé comportant de plus une étape de limitation d'au moins l'une des variations de la tension et de la fréquence appliquées au circuit pour empêcher d'amener le point de fonctionnement courant hors du domaine de fonctionnement tension-fréquence associé au circuit, ou une étape de correction d'au moins l'une des variations de la tension et de la fréquence appliquées au circuit pour empêcher d'amener le point de fonctionnement courant hors du domaine de fonctionnement tension-fréquence associé au circuit.

**2.** Procédé selon la revendication 1, dans lequel l'asservissement comporte une mise à jour conjointe de la tension et de la fréquence appliquées au circuit.

**3.** Procédé selon l'une des revendications 1 ou 2, comportant en outre une étape de réglage final (S175) du point de fonctionnement du circuit pour l'amener du deuxième point de fonctionnement vers un point de fonctionnement final.

**4.** Procédé selon la revendication 3, dans lequel ladite étape de réglage final comporte un réglage de la fréquence du circuit pour rapprocher ou éloigner le point de fonctionnement du circuit de ladite frontière.

**5.** Procédé selon l'une des revendications 1 à 3, comportant en outre une étape de réglage initial (S173) du point de fonctionnement du circuit pour l'amener d'un point de fonctionnement initial vers le premier point de fonctionnement.

**6.** Procédé selon la revendication 5, dans lequel ladite étape de réglage initial comporte un réglage de la tension du circuit pour éloigner le point de fonctionnement du circuit de ladite frontière.

**7.** Procédé selon l'une des revendications 3 à 6, comportant en outre une étape de découplage de l'application de la fréquence de l'application de la tension au circuit préalablement auxdites étapes de réglage.

**8.** Procédé selon l'une des revendications 1 à 7, comportant en outre une étape de sélection (S171) de ladite courbe de référence parmi un ensemble de courbes de référence stockées en fonction d'au moins un paramètre de fonctionnement du circuit.

**9.** Procédé selon l'une des revendications 1 à 8, comportant en outre une étape de calibrage (S170) pour définir ou modifier ladite courbe de référence.

**10.** Procédé selon la revendication 9, dans lequel l'étape de calibrage est déclenchée en fonction d'au moins un paramètre de fonctionnement du circuit.

**11.** Procédé selon la revendication 10, dans lequel ledit paramètre de fonctionnement du circuit est l'un parmi :

- une température du circuit,
- un taux de fautes temporelles du circuit, et
- un paramètre reflétant un vieillissement du circuit.

**12.** Procédé selon l'une des revendications 1 à 11, dans lequel la marge de sécurité dépend de plusieurs paramètres, dont la température du circuit, le vieillissement des composants, les variations lentes de la tension d'alimentation et la variabilité du processus de fabrication des composants.

**13.** Dispositif de contrôle de circuit électronique comportant une unité de traitement (182) configurée pour mettre en œuvre un procédé selon l'une des revendications 1 à 12.

**Patentansprüche**

**1.** Verfahren zur Steuerung einer elektronischen Schaltung, um die Schaltung von einem ersten Spannungs-Frequenz-Betriebspunkt ((V1, F1), (V', F1)) zu einem zweiten Spannungs-Frequenz-Betriebspunkt (V2, F2) zu bringen, wobei jeder Spannungs-Frequenz-Betriebspunkt durch eine Spannung und eine Frequenz definiert ist, die über ein Spannungsstellglied bzw. ein Frequenzstellglied angelegt werden, wobei diese Stellglieder am Eingang einen Referenzwert der Spannung bzw. der Frequenz annehmen,
**dadurch gekennzeichnet, dass**
es einen Schritt (S174) der Regelung eines aktuellen Spannungs-Frequenz-Betriebspunktes (V, F) in Bezug auf eine Referenzkurve (T3, T4, T5) eines der Schaltung zugeordneten Spannungs-Frequenz-Betriebsbereichs umfasst, wobei die Referenzkurve den ersten und den zweiten Betriebspunkt entlang einer optimalen Trajektorie in Bezug auf eine Grenze des Bereichs verbindet, die für jeden für die Schaltung zulässigen Spannungswert die maximal zulässige Frequenz darstellt, wobei die Referenzkurve der Grenze folgt, indem sie mit einem Sicherheitsspielraum so nahe wie möglich an dieser Grenze verläuft,
wobei die Regelung die mehrmalige Wiederholung der nachstehenden Schritte während des Übergangs vom ersten Betriebspunkt zum zweiten Betriebspunkt umfasst:

a) Messen eines aktuellen Spannungswertes und eines aktuellen Frequenzwertes, die an die Schaltung angelegt werden und dem aktuellen Betriebspunkt entsprechen,

b) Bestimmen von zumindest einem neuen Referenzwert, der am Eingang von zumindest einem der Stellglieder anzulegen ist, wobei der neue Referenzwert entsprechend den aktuellen Spannungs- und Frequenzwerten des aktuellen Betriebspunktes und entsprechend der Referenzkurve definiert ist, und

c) Anwenden des bzw. der neuen Referenzwert(e) jeweils an dem betreffenden Stellglied,

wobei das Verfahren ferner einen Schritt des Begrenzens zumindest einer der Schwankungen der an die Schaltung angelegten Spannung und Frequenz umfasst, um zu verhindern, dass der aktuelle Betriebspunkt außerhalb des der Schaltung zugeordneten Spannungs-Frequenz-Betriebsbereichs gebracht wird, oder einen Schritt des Korrigierens zumindest einer der Schwankungen der an die Schaltung angelegten Spannung und Frequenz umfasst, um zu verhindern, dass der aktuelle Betriebspunkt außerhalb des der Schaltung zugeordneten Spannungs-Frequenz-Betriebsbereichs gebracht wird.

2. Verfahren nach Anspruch 1, wobei die Regelung eine gemeinsame Aktualisierung der an die Schaltung angelegten Spannung und Frequenz umfasst.

3. Verfahren nach einem der Ansprüche 1 oder 2, ferner umfassend einen Schritt (S175) der Endeinstellung des Betriebspunktes der Schaltung, um ihn von dem zweiten Betriebspunkt zu einem Endbetriebspunkt zu bringen.

4. Verfahren nach Anspruch 3, wobei der Schritt der Endeinstellung ein Einstellen der Frequenz der Schaltung umfasst, um den Betriebspunkt der Schaltung an die Grenze anzunähern oder davon weg zu bringen.

5. Verfahren nach einem der Ansprüche 1 bis 3, ferner umfassend einen Schritt (S173) der Anfangseinstellung des Betriebspunktes der Schaltung, um ihn von einem Anfangsbetriebspunkt zum ersten Betriebspunkt zu bringen.

6. Verfahren nach Anspruch 5, wobei der Schritt der Anfangseinstellung ein Einstellen der Spannung der Schaltung umfasst, um den Betriebspunkt der Schaltung von der Grenze weg zu bringen.

7. Verfahren nach einem der Ansprüche 3 bis 6, ferner umfassend einen Schritt der Entkopplung des Anlegens der Frequenz vom Anlegen der Spannung an die Schaltung, der vor den Schritten des Einstellens erfolgt.

8. Verfahren nach einem der Ansprüche 1 bis 7, ferner umfassend einen Schritt (S171) des Auswählens der Referenzkurve aus einem Satz gespeicherter Referenzkurven in Abhängigkeit von zumindest einem Betriebsparameter der Schaltung.

9. Verfahren nach einem der Ansprüche 1 bis 8, ferner umfassend einen Schritt des Kalibrierens (S170) zum Definieren oder Ändern der Referenzkurve.

10. Verfahren nach Anspruch 9, wobei der Schritt des Kalibrierens in Abhängigkeit von zumindest einem Betriebsparameter der Schaltung ausgelöst wird.

11. Verfahren nach Anspruch 10, wobei der zumindest eine Betriebsparameter der Schaltung einer ist aus:

- einer Temperatur,
- einer Zeitfehlerquote der Schaltung und
- einem Parameter, der eine Alterung der Schaltung widerspiegelt.

12. Verfahren nach einem der Ansprüche 1 bis 11, wobei der Sicherheitsspielraum von mehreren Parametern abhängt, darunter von der Temperatur der Schaltung, der Alterung der Komponenten, langsamen Schwankungen der Versorgungsspannung und der Variabilität des Herstellungsprozesses der Komponenten.

13. Vorrichtung zum Steuern einer elektronischen Schaltung, enthaltend eine Verarbeitungseinheit (182), die dazu ausgelegt ist, ein Verfahren nach einem der Ansprüche 1 bis 12 durchzuführen.

**Claims**

1. A method of controlling an electronic circuit, to bring the circuit from a first voltage-frequency operating point ((V1, F1) (V1', F1)) to a second voltage-frequency operating point (V2, F2), each voltage-frequency operating point being defined by a voltage and a frequency which are respectively applied by a voltage actuator and a frequency actuator, these actuators taking as input a reference value, respectively of voltage and of frequency,

**characterized in that** it comprises a step of feedback control (S174) of a current voltage-frequency operating point (V, F) relative to a reference curve (T3, T4, T5) of a voltage-frequency operating domain associated with the circuit, said reference curve linking said first and second operating points according to an optimum path relative to a boundary of said domain representing, for each voltage value allowable by the circuit, the maximum authorized frequency, the reference curve following said boundary while getting as close as possible with a safety margin,

the feedback control comprising the repetition of the following steps a plurality of times during the transition from the first operating point to the second operating point:

a) measuring a current value of voltage and a current value of frequency that are applied to the circuit and corresponding to the current operating point,

b) determining at least one new reference value to apply to the input of at least one of the actuators, the new reference value being defined according to the current values of voltage and frequency of the current operating point and according to the reference curve; and

c) applying the new reference value or values respectively to the actuator concerned,

the method further comprising a step of limiting at least one of the variations in the voltage and in the frequency applied to the circuit to prevent bringing the current operating point outside the voltage-frequency operating domain associated with the circuit, or a step of correcting at least one of the variations in the voltage and in the frequency applied to the circuit to prevent bringing the current operating point outside the voltage-frequency operating domain associated with the circuit.

2. A method according to claim 1, in which the feedback control comprises a step of conjointly updating the voltage and the frequency that are applied to the circuit.

3. A method according to one of claims 1 or 2, further comprising a step of final adjustment (S175) of the operating point of the circuit to bring the second operating point towards a final operating point.

4. A method according to claim 3, in which said final adjustment step comprises an adjustment of the frequency of the circuit to bring the operating point of the circuit closer to or away from said boundary.

5. A method according to one of claims 1 to 3, further comprising a step of initial adjustment (S173) of the operating point of the circuit to bring an initial operating point towards the first operating point.

6. A method according to claim 5, in which said initial adjustment step comprises an adjustment of the voltage of the circuit to bring the operating point of the circuit away from said boundary.

7. A method according to one of claims 3 to 6, further comprising a step of uncoupling the application of the frequency from the application of the voltage to the circuit prior to said adjustment steps.

8. A method according to one of claims 1 to 7, further comprising a step of selecting (S171) said reference curve from among a set of stored reference curves on the basis of at least one operating parameter of the circuit.

9. A method according to one of claims 1 to 8, further comprising a calibrating step (S170) to define or modify said reference curve.

10. A method according to claim 9, in which the calibrating step is triggered on the basis of at least one operating parameter of the circuit.

11. A method according to claim 10, in which said operating parameter of the circuit is one of:

- a temperature of the circuit,
- a timing fault rate of the circuit, and
- a parameter reflecting ageing of the circuit.

12. A method according to one of claims 1 to 11, in which the safety margin depends on several parameters, among which the temperature of the circuit, the ageing of the components, the slow variations in the supply voltage and the variability in the manufacturing process of the components.

13. An electronic circuit control device comprising a processing unit (182) configured for implementing a method according to one of claims 1 to 12.

Fig. 1

Frontière 2

F

F2

T2

Zone non
fonctionnelle

Frontière 1

Zone
fonctionnelle

F1

V1    V2    V

T1

Fig. 2

Frontière 2

F

F2

T3

Zone non
fonctionnelle

Frontière 1

Zone
fonctionnelle

F1

V1    V2    V

Fig. 3

Frontière 2

F

F2

T4

Zone non
fonctionnelle

Frontière 1

Réglage initial

Zone
fonctionnelle

F1

V1 V1'    V2    V

Fig. 4

Frontière 2

Réglage
fin de la
fréquence

Frontière 1

F

F2

F1

T5

V1    V2

V

Fig. 5

50

Vref ⊙ → Actionneur V → Vout

52 ⟶ Contrôle ← Calibration
/ réglage

Fref ⊙ → Actionneur F → Fout

51

604                    601

Vref + ⊗ Vref' → Limiteur V Vref* → Actionneur
de tension V → Vout

Vmin@Fout

603

ΔV

608

Déconnexion → Calibrage → Calcul ΔV

Mécanisme de
mise à l'échelle

600

607

Calcul ΔF

609

ΔF

605

Fmax@Vout

Fref + ⊗ Fref' → Limiteur F Fref* → Actionneur de
fréquence F → Fout

606                    602

Fig. 6

Fig. 7

Fig. 8

Fig. 9

Courbe de
référence VFref

Point de
fonctionnement
de référence
correspondant à
la tension courante

$F_2$

$F_i$

$F_1$

$V_1$    $V_{out}$ $V_2$

## Fig. 10

Courbe VFsat

Zone non
fonctionnelle

$F_2$

$F_{max}$

Point de
fonctionnement
de référence
correspondant à
la tension courante

$F_1$

$F_{min}=0$

$V_1$    $V_{out}$ $V_2$

Zone
fonctionnelle

## Fig. 11

(a) Tensions de référence, modifiées par le contrôle conjoint et de sortie

(b) Fréquences de référence, modifiées par le contrôle conjoint et de sortie

(c) Delta de tension calculé par le contrôle conjoint

(d) Delta de frequence calculé par le contrôle conjoint

(e) Trajectoire des sorties entre 1e-6 et 4e-6 sec

(f) Trajectoire des sorties entre 4e-6 et 7e-6 sec

Fig. 12

EP 2 795 426 B1

22

Fig. 13

Fig. 14

Fig. 15

Fig. 16

| Calibrage | S170 |

| Sélection de la courbe de référence | S171 |

| Détermination du point de fonctionnement courant | S172 |

| Réglage initial du point de fonctionnement | S173 |

| Asservissement du point de fonctionnement | S174 |

| Réglage final du point de fonctionnement | S175 |

## Fig. 17

180

| MEM | PROC | COM |

181      182      183

## Fig. 18

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20110083221 A
- US 2002002689 A

- US 2004057324 A
- US 2007229054 A

**Littérature non-brevet citée dans la description**

- **ZHU et al.** Feedback EDF scheduling exploiting hardware-assisted asynchronous dynamic voltage scaling. *ACM SIGPLAN Notices,* 2005, vol. 40 (7), 212-222
- **WU et al.** Formal online methods for voltage/frequency control in multiple clock domain microprocessors. *ACM SIGARCH Computer Architecture News,* 2004, vol. 32 (5), 248-259
- **JUANG et al.** Distributed, Formal Energy Management of Chip Multiprocessors. *ISLPED'05,* 08 Août 2005
- **CHOI et al.** Fine-grained dynamic voltage and frequency scaling for precise energy and performance tradeoff based on the ratio of off-chip access to on-chip computation times. *IEEE Trans. on Computer-Aided Design of Integrated Circuits and Systems,* 2005, vol. 24 (1), 18-28
- **LU et al.** Control-theoretic dynamic frequency and voltage scaling for multimedia workloads. *Proc. of the international conférence on compilers, architecture, and synthesis for embedded systems,* 2002, 156-163
- **HERBERT et al.** Variation-aware dynamic voltage/frequency scaling. *IEEE 15th International Symposium on High Performance Computer Architecture (HPCA),* 2009, 301-312
- **BEIGNÉ et al.** Innovative Local Adaptive Voltage Scaling Architecture for On-chip Variability Compensation. *NEWCAS,* 26 Juin 2011

- **LESECQ et al.** Low-Cost and Robust Control of a DFLL for Multi-Processor System-On-Chip. *IFAC World Congress,* 2011
- **REBAUD et al.** Timing slack monitoring under process and environmental variations: Application to a DSP performance optimization. *Microelectronics Journal,* 2011
- **OLFATI-SABER et al.** Consensus and Coopération in Networked Multi-Agent Systems. *Proceedings of the IEEE,* Janvier 2007, vol. 95 (1), 215-233
- **FAX et al.** Information Flow and Cooperative Control of Vehicle Formations. *IEEE Transactions on Automatic Control,* 09 Septembre 2004, vol. 49
- **WANG et al.** Consensus of High Order Linear Multi-agent Systems Using Output Error Feedback. *Joint 48th IEEE Conférence on Decision and Control and 28th Chinese Control Conférence,* 16 Décembre 2009
- **WANG et al.** Consensus Of Multi-Agent Linear Dynamic Systems. *Asian Journal of Control,* Mars 2008, vol. 10 (2), 144-155
- **H. KHALIL.** Non-linear Systems. Prentice Hall, 2002
- **ALBEA-SANCHEZ et al.** Control and Stability Analysis for the Vdd-hopping Mechanism. *IEEE MSC, Conférence on Control and Applications,* 2009
- **LESECQ et al.** Low-Cost and Robust Control of a DFLL for Multi-Processor System-On-Chip. *18th IFAC World Congress,* 28 Août 2011